# EUROPÄISCHE PATENTANMELDUNG

(11) **EP 0 612 954 A1**
(43) Veröffentlichungstag der Anmeldung: **31.08.1994**
(21) Anmeldenummer: 94102674.2
(22) Anmeldetag: 23.02.1994
(51) Int. Cl.: F16L 59/02

(54) **Gepresste Verbundplatte als Formteil zum Einbau für die Wärmedämmung, vorzugsweise bei Koch- und Heizgeräten**

(30) Priorität: 27.02.1993 DE 9302904 U
(71) Anmelder: Fritz Eichenauer GmbH & Co. KG, D-76870 Kandel (DE)
(72) Erfinder: Roller, Hanno, D-76870 Kandel (DE); Sitter, Hermann, D-76770 Hatzenbühl (DE); Starck, Roland, D-76756 Bellheim (DE); Stritzinger, Jürgen, D-76872 Freckenfeld (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Es wird eine in einem Arbeitsgang herstellbare, aus einer oder mehreren Schichten gepreßte Verbundplatte vorgeschlagen, die, auf der Basis von Perlite als wärmedämmendes Material, zum Einbau und zur Wärmedämmung, vorzugsweise in Koch- und Heizgeräten, beruhend dadurch gekennzeichnet ist, daß die hoch wärmedämmende Grundplatte (4) durch eine im Verbund und in einem Pressvorgang mit dieser hergestellten Schutzschicht (5) gegen thermische und/oder mechanische Überlastungen geschützt ist.

## Beschreibung

Die Erfindung betrifft eine in einem Arbeitsgang herstellbare, aus einer oder mehreren Schichten gepreßte Verbundplatte, auf der Basis von Perlite als wärmedämmendes Material, zum Einbau als Wärmedämmung, vorzugsweise in Koch- und Heizgeräten, sowie das Verfahren zur Herstellung der Verbundplatten gemäß dem Oberbegriff des Patentanspruches 1.

In der Vergangenheit wurden Wärmedämmplatten für diese Anwendungsbereiche aus Asbestfasern hergestellt. Gegenwärtig werden zur Wärmedämmung bei Koch- und Heizgeräten Formteile bzw. Platten aus Glasfaser, Silikatfaser, Aluminium-Silikatfaser oder Aluminium-Oxydfaser verwendet und je nach Anforderung an die Temperaturbelastbarkeit mit organischen oder anorganischen Bindem zu Fest- oder Formkörpern gebunden.

Diese mit Asbest- und Fasermaterial hergestellten Dämmstoffe haben allesamt den Nachteil, daß der Umgang bei der Herstellung und im Gebrauch mit derartigen Stoffen gesundheitsschädigend ist und bei der Entsorgung fast unüberwindliche Probleme darstellt. Diese Dämmstoffe sind nicht recycelbar. Datüber hinaus sind diese vorgenannten Faserdämmstoffe aus diesen genannten Gründen nur noch bedingt einsetzbar.

Unter der Bezeichnung WDS® stellt die Firma Wacker-Chemie GmbH, 8000 München 22, einen mikroporösen thermischen Dämmstoff mit extrem niedrigen Wärmeleitzahlen, entsprechend sehr gutem Isolationsvermögen her. Dieser Dämmstoff besteht ausschließlich aus organischen, oxydischen Substanzen. Hauptbestandteil des Dämmstoffes ist bis zu 2/3 hoch disperse Kieselsäure. Die übrigen Beimengungen sind Absorbierungsstoffe für Infrarotstrahlung oder Silikate sowie keramische Fasern.

Zur Herstellung dieses Dämmstoffes ist ein spezieller nachträglicher Härtungsprozess bei hohen Temperaturen erforderlich, der dem Brennverfahren in der Keramik ähnlich ist.

Ein großer Nachteil dieses Dämmstoffes ist dieser spezielle notwendige Härtungsprozess, insbesondere dann, wenn dieser mit den Brennvorgängen, wie bei keramischen Materialien vergleichbar ist. Diese Brennvorgänge sind durch den großen Energieaufwand sehr zeit- und kostenaufwendig.

Als alternative Grundstoffe zur Herstellung von Dämmaterialien bieten sich die in der Natur vorkommenden Mineralien wie z.B.: Vermiculite
Perlite
Diatomeenerde (Kieselgur)
Blähton
Reisschalenasche
oder synthetisch hergestellte Isolierstoffe wie z.B. pyrogene Kieselsäure oder amorphe Kieselsäure, bekannt auch als "RW-Füller" bei metallurgischer Erzeugung von Silicium im Lichtbogenofen, an. Diese vorgenannten alternativen Grundstoffe werden nicht nur zur Herstellung von Dämmstoffen, sondern in den mannigfaltigsten Bereichen, wie z.B. in der Lebensmittelindustrie und vielen Bereichen der Chemie und Physik, als Roh-, Füll- und Ersatzstoffe verwendet.

Diese zur Herstellung von Wärmedämmstoffen genannten Materialien haben jeweils für sich unterschiedliche mechanische und wärmetechnische Eigenschaften.

So ist z.B. ein Dämmaterial mit "Vermiculite" (Aluminium-Eisen-Magnesium-Silikat) als Basismaterial für eine maximale Anwendungstemperatur von 1100°C geeignet, während ein Dämmaterial mit "Perlite" als Basismaterial nur bis zu einer Anwendungstemperatur von ca. 850°C geeignet ist.

Die Wärmedämmeigenschaften sind beim Basismaterial "Vermiculite" um ca. 25 % geringer als beim Dämmaterial aus "Perlite". Die Wärmeleitzahl bei einer Temperatur von 200°C beträgt bei "Vermiculite" 0,106 W/mK und bei "Perlite" 0,08 W/mK Diese vorhandenen Unterschiede bedeuten beim Einsatz als Isolierstoff, z.B. als Formteil in einem Koch- oder Heizgerät, daß die Isolierstoff-Formteile aus "Vermiculite" eine größere Dicke haben müssen, als das Isolierstoff-Formteil aus "Perlite", um eine gleiche zulässige Temperatur an der äußeren Verkleidung, als Berührungstemperatur, zu erreichen. Die notwendige dickere Wärmedämmschicht bei Verwendung von "Vermiculite" bedeutet weiterhin eine größere Volumenabmessung des Gerätes.

Die zulässige Temperaturbelastung beim Isolierstoff-Formteil aus "Perlite" würde beim Einsatz für die oben genannten Anwendungsfälle überschritten werden, so daß die vorhandenen besseren Wärmedämmeigenschaften und die sich daraus ergebenden Vorteile beim Einsatz als Formteil, wie z.B. in einem Nachtstromspeicherofen, nicht genutzt werden könnten.

Aufgabe der Erfindung ist es, einen Isolierstoff als Formteil zur Wärmedämmung, vorzugsweise zum Einsatz in elektrischen Koch- und Heizgeräten herzustellen, bei dem einmal die thermischen Eigenschaften des Dämmaterials mit dem höheren Dämmwert und die höhere Temperaturbelastbarkeit des Materials mit dem niedrigeren Dämmwert sowie die mechanische Festigkeit des jeweils höherwertigen Basismaterials je nach Anforderung an das Formteil genutzt und eingesetzt werden kann.

Diese Aufgabe wird dadurch gelöst, daß durch die Kombination der Werkstoffe mit den für den jeweiligen Einsatzbereich notwendigen Erfordernissen die optimalen und das Material kennzeichnenden Eigenschaften genutzt werden.

So besitzt z.B. "Perlite" von den oben aufgezählten Grundstoffen zur Herstellung von Isoliermaterial, wie schon bereits erwähnt, die besseren Wärmedämmungseigenschaften, jedoch aber eine eingeschränkte Temperaturbelastbarkeit.

Durch die Ausbildung einer Schutzschicht zur Abschirmung der belastenden hohen Temperaturen des gut wärmedämmenden Grundstoffes "Perlite", können Formteile zur Wärmedämmung mit sogenannten Schutzschichten hergestellt werden, welche den gestellten notwendigen Anforderungen in wärmetechnischer und mechanischer Hinsicht gerecht werden.

Die nachfolgend näher bezeichneten Ansätze können für die Ausbildung der Schutzschichten so eingestellt werden, daß das für die Grundplatte verwendete hoch wärmedämmende Perlite für die jeweiligen mechanischen und thermischen Anforderungen geschützt und genutzt werden kann. Die Schutzschicht wird mit der Grundplatte in einem Arbeitsgang als Verbundpresskörper hergestellt. Für erhöhte mechanische Belastungen (mechanische Schutzschicht) hat sich der folgende näher bezeichnete Versatz für die Herstellung der Schutzschicht als vorteilhaft erwiesen:
- 20 bis 40 Gewichtsprozent: - Perlite
- 10 bis 40 Gewichtsprozent: - Reisschalenasche
- 20 bis 40 Gewichtsprozent: - Reaktionsgemisch bestehend aus:
a) feinteiligem Oxydgemisch mit Gehalten von amorphem Siliciumdioxyd und Aluminium - gewonnen als Filterstaub aus der Korund- oder Mullitherstellung,
b) glasartiger, amorpher Elektrofilterasche aus Hochtemperatur-Steinkohlekraftwerken,
c) gemahlenem kalziniertem Bauxid,
d) ungelöstem, amorphem SiO₂, insbesondere aus einer amorphen, dispers-pulverförmigen, entwässerten oder wasserhaltigen Kieselsäure oder aus Hochtemperaturprozessen,
e) Metakaolin
und einem Binder aus hoch alkalihaltigem Wasserglas von 10 bis 30 Gewichtsprozenten.

Für die erhöhten Temperaturanforderungen an die Grundplatte hat sich der nachfolgend näher bezeichnete Versatz als thermische Schutzschicht im Verbund mit der Grundplatte als vorteilhaft erwiesen:
- 5 bis 20 Gewichtsprozent: - Perlite
- 20 bis 40 Gewichtsprozent: - Kieselgur
- 20 bis 40 Gewichtsprozent: - Reisschalenasche
- 10 bis 40 Gewichtsprozent: - Reaktionsgemisch bestehend aus:
a) feinteiligem Oxydgemisch mit Gehalten von amorphem Siliciumdioxyd und Aluminium - gewonnen als Filterstaub aus der Korund- und Mullitherstellung,
b) glasartiger, amorpher Elektrofilterasche aus Hochtemperatur-Steinkohlekraftwerken,
c) gemahlenem kalziniertem Bauxid,
d) ungelöstem, amorphem SiO₂, insbesondere aus einer amorphen, dispers-pulverförmigen, entwässerten oder wasserhaltigen Kieselsäure oder aus Hochtemperaturprozessen,
e) Metakaolin
und einem Binder aus hoch alkalihaltigem Wasserglas von 10 bis 30 Gewichtsprozent.

Diese vorgenannten Schutzschichten, welche in einem Pressvorgang mit der Grundplatte hergestellt werden, können je nach Anforderung einseitig oder zweiseitig oder hintereinander auf der Grundplatte vorgesehen werden. So kann z.B. auch die Grundplatte mit Schutzschichten der unterschiedlichsten Anforderungen, d.h., auf der einen Seite eine Schutzschicht für erhöhte mechanische Anforderungen und auf der anderen Seite eine Schutzschicht mit erhöhten thermischen Anforderungen versehen sein.

Die oben näher bezeichneten Ansätze sind weiterhin im Hinblick auf ihre Ausdehnung und dem Maß für das Schwinden den vorhandenen Werten des Grundstoffes angepaßt, so daß eine Trennung der Schutzschicht von der Grundschicht durch eventuell auftretende Scherspannungen und Querkräfte nicht gegeben ist.

In den Zeichnungen sind bevorzugte, vorteilhaft einsetzbare Formteile zur Wärmedämmung gemäß der Erfindung schematisch dargestellt und anhand dieser noch näher erläutert.

Es zeigen:
- **Fig. 1**: einen Querschnitt durch ein wärmedämmendes Formteil mit einseitiger Schutzschicht als Verbundteil,
- **Fig. 2**: einen Querschnitt durch ein wärmedämmendes Formteil mit beidseitig angeordneten Schutzschichten als Verbundplatte,
- **Fig. 3**: einen Querschnitt durch ein wärmedämmendes Formteil, bei dem die mechanische und die thermische Schutzschicht einseitig hintereinander vor der Grundplatte angeordnet ist,
- **Fig. 4**: einen Wärmedurchgangsverlauf durch ein wärmedämmendes Formteil mit einseitig angeordneter thermischer Schutzschicht.

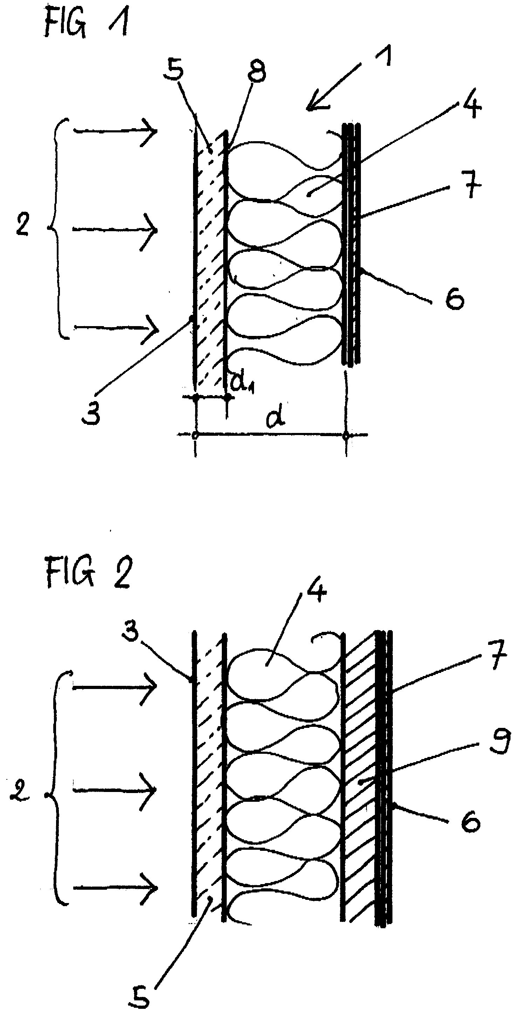

**Fig. 1** - Der im Querschnitt dargestellte Formkörper (1) hat auf der mit hohen Temperaturen (2) beaufschlagten Seite (3) eine die hohe wärmedämmende Grundplatte (4) schützende Schutzschicht (5). Die Gesamtdicke (d) des Formkörpers (1) ist abhängig von der zu erwartenden Temperaturgröße (2) und der an der Oberfläche (6) des Gehäuseteiles (7) eines Koch- oder Heizgerätes zulässigen Berührungstemperatur.

Die Dicke (d₁) der Schutzschicht (5), z.B. für erhöhte Anforderungen an die Wärmedämmung, ist gemäß des oben und zu diesem Zweck als vorteilhaft näher bezeichneten Versatzes so gewählt, daß die an der mit hohen Temperaturen (2) beaufschlagten Seite (3) bis zur Verbundstelle (8) mit der Grundplatte (4) auf das Maß reduziert wird, welches als zulässige Temperaturgröße des gut wärmedämmenden Materials der Grundplatte (4) gegeben ist.

In **Fig. 2** ist der Querschnitt eines wärmedämmenden Formkörpers (1) mit einer Schutzschicht (5) auf der mit höheren Temperaturen (2) beaufschlagten Seite (3) und mit einer weiteren Schutzschicht (9) im Verbund mit der Grundplatte (4) auf der Seite zur Gehäusewand (7) dargestellt. Diese Schutzschicht (9) ist vorzugsweise für geforderte mechanische Belastungen, die über die zulässige mechanische Belastung der Grundplatte (4) hinausgehen würden, angeordnet

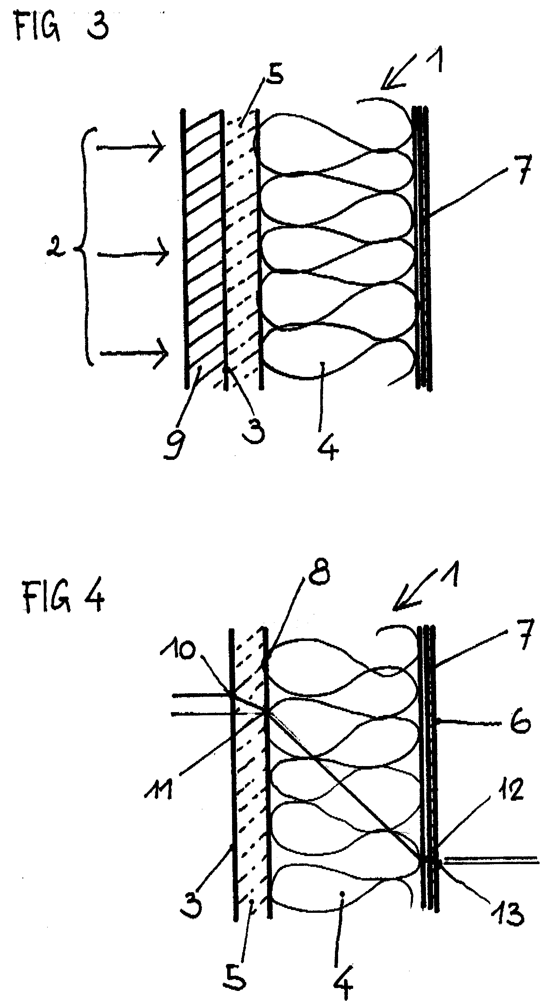

Bei dem wärmedämmenden Formteil (1) in **Fig. 3** ist die mechanische Schutzschicht (9) mit der thermischen Schutzschicht (5) und diese wiederum mit der Grundplatte (4) im Verbund hergestellt. Diese Anordnung einer mechanischen Schutzschicht (9) ist z.B. dann von Vorteil, wenn mechanische Einflüsse die Oberfläche (3) der thermischen Schutzschicht (5) verletzen könnten und somit die zulässigen Temperaturen für die Grundplatte (4) überschritten würden.

In **Fig. 4** ist der Wärmedurchgang durch ein wärmedämmendes Formteil (1) mit einer einseitig angeordneten thermischen Schutzschicht (5) dargestellt. Die mit hoher Temperatur (2) beaufschlagte Seite (3) der thermischen Schutzschicht (5) am Punkt (10) anstehende Temperatur, z.B. 1000°C, wird im Verlauf bis zum Übergang am Punkt (11) soweit reduziert, daß die für die Grundplatte (4) zulässige Temperatur an der Verbundstelle (8) nicht überschritten wird. Im Verlauf durch die Grundplatte (4) mit dem größeren Wärmewiderstand verringert sich die Temperatur bis zum Punkt (12) auf die für die Gehäusewand (7) zulässige Berührungstemperatur am Punkt (13) der Oberfläche (6).

## Patentansprüche

1. Eine in einem Arbeitsgang herstellbare, aus einer oder mehreren Schichten gepresste Verbundplatte, auf der Basis von Perlite als wärmedämmendes Material, zum Einbau und zur Wärmedämmung, vorzugsweise in Koch- und Heizgeräten, dadurch gekennzeichnet, daß die hoch wärmedämmende Grundplatte (4) durch eine im Verbund und in einem Pressvorgang mit dieser hergestellten Schutzschicht (5, 9) gegen thermische und/oder mechanische Überlastungen geschützt ist.

2. Verbundplatte nach Anspruch 1., dadurch gekennzeichnet, daß die Schutzschicht (5) zum Schutz gegen thermische Überlastungen der Grundplatte (4) aus einer mit dieser verpressbaren Masse gemäß der nachfolgenden näher bezeichneten Mischung besteht:
5 bis 20 Gewichtsprozent - Perlite
20 bis 40 Gewichtsprozent - Kieselgur
20 bis 40 Gewichtsprozent - Reisschalenasche
10 bis 40 Gewichtsprozent - Reaktionsgemisch bestehend aus:
a) feinteiligem Oxydgemisch mit Gehalten von amorphem Siliciumdioxyd und Aluminium - gewonnen als Filterstaub aus der Korund- oder Mullitherstellung,
b) glasartiger, amorpher Elektrofilterasche aus Hochtemperatur-Steinkohlekraftwerken,
c) gemahlenem kalziniertem Bauxid,
d) ungelöstem, amorphem SiO₂, insbesondere aus einer amorphen, dispers-pulverförmigen, entwässerten oder wasserhaltigen Kieselsäure oder aus Hochtemperaturprozessen,
e) Metakaolin,
10 bis 30 Gewichtsprozent - Binder aus hoch alkalihaltigem Wasserglas.

3. Verbundplatte nach Anspruch 1., dadurch gekennzeichnet daß die Schutzschicht (9) zum Schutz gegen mechanische Überlastung der Grundplatte (4) aus einer mit dieser verpressbaren Masse, gemäß der nachfolgenden Mischung hergestellt ist:
20 bis 40 Gewichtsprozent - Perlite
10 bis 40 Gewichtsprozent - Reisschalenasche
20 bis 40 Gewichtsprozent - Reaktionsgemisch bestehend aus:
a) feinteiligem Oxydgemisch mit Gehalten von amorphem Siliciumdioxyd und Aluminium - gewonnen als Filterstaub aus der Korund- oder Mullitherstellung,
b) glasartiger, amorpher Elektrofilterasche aus Hochtemperatur-Steinkohlekraftwerken,
c) gemahlenem kalziniertem Bauxid,
d) ungelöstem, amorphem SiO₂, insbesondere aus einer amorphen, dispers-pulverförmigen, entwässerten oder wasserhaltigen Kieselsäure oder aus Hochtemperaturprozessen,
d) Metakaolin,
10 bis 30 Gewichtsprozent - Binder aus hoch alkalihaltigem Wasserglas.

4. Verbundplatte nach Anspruch 1. bis 3., dadurch gekennzeichnet, daß die mechanische Schutzschicht (9) mit der thermischen Schutzschicht (5) im Verbund mit der Grundplatte (4) hergestellt ist.

5. Verbundplatte nach Anspruch 1. bis 3., dadurch gekennzeichnet, daß die hochwärmedämmende Grundplatte (4) aus Perlite besteht.

6. Verbundplatte nach Anspruch 1., 2., 3. und 5., dadurch gekennzeichnet, daß die Grundplatte (4) einseitig mit einer der Schutzschichten (5) oder (9) im Verbund gepresst ist.

7. Verbundplatte nach Anspruch 1., 2., 3. und 5., dadurch gekennzeichnet, daß die Grundplatte (4) wechselseitig mit der Schutzschicht (5) zum Schutz gegen thermische Überlastung und der Schutzschicht (9) zum Schutz gegen mechanische Überlastung, im Verbund gepresst ist.
